# FASCICULE DE BREVET EUROPEEN

(11) **EP 2 912 808 B1**
(45) Date de publication et mention de la délivrance du brevet: **19.06.2019**
(21) Numéro de dépôt: 13783338.0
(22) Date de dépôt: 25.10.2013
(51) Int. Cl.: H04L 12/46, G06F 12/00, G06F 9/44, H04L 12/713, H04L 12/715, G06F 9/455, H04L 29/08, H04L 12/723

(54) **PROCEDE ET SYSTEME PERMETTANT L'INTERACTION DE MACHINES VIRTUELLES HEBERGEES PAR DES SOLUTIONS DE VIRTUALISATION HETEROGENES**
VERFAHREN UND SYSTEM ZUR ERMÖGLICHUNG DER INTERAKTION VON DURCH HETEROGENE VIRTUALISIERUNGSSYSTEME GEHOSTETEN VIRTUELLEN MASCHINEN
METHOD AND SYSTEM ENABLING THE INTERACTION OF VIRTUAL MACHINES HOSTED BY HETEROGENEOUS VIRTUALIZATION SYSTEMS

(30) Priorité: 26.10.2012 FR 1260210
(43) Date de publication de la demande: 02.09.2015
(73) Titulaire: AIRBUS (SAS), 31700 Blagnac (FR); Cassidian CyberSecurity SAS, 78990 Elancourt (FR)
(72) Inventeur: BIONDI, Philippe, F-92210 Saint-Cloud (FR); PROST, Charles, F-78180 Montigny Le Bretonneux (FR)
(74) Mandataire: Gicquel, Olivier Yves Gérard
(86) Numéro de dépôt international: PCT/EP2013/072375
(87) Numéro de publication internationale: WO 2014/064242

(56) Documents cités:
- EP-A2- 2 369 809
- WO-A1-2008/047930
- US-A1- 2005 262 269
- NARTEN T ET AL: "Problem Statement: Overlays for Network Virtualization; draft-ietf-nvo3-overlay-problem-statement- 01.txt", PROBLEM STATEMENT: OVERLAYS FOR NETWORK VIRTUALIZATION; DRAFT-IETF-NVO3-OVERLAY-PROBLEM-STATEMENT- 01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 23 octobre 2012 (2012-10-23), pages 1-22, XP015088485,
- BHUMIP KHASNABISH ZTE USA ET AL: "Requirements for Mobility and Interconnection of Virtual Machine and Virtual Network Elements; draft-khasnabish-vmmi-problems-02.txt", REQUIREMENTS FOR MOBILITY AND INTERCONNECTION OF VIRTUAL MACHINE AND VIRTUAL NETWORK ELEMENTS; DRAFT-KHASNABISH-VMMI-PROBLEMS-02.TXT, INTERNET ENGINEERING TASK FORCE, IETF; STANDARDWORKINGDRAFT, INTERNET SOCIETY (ISOC) 4, RUE DES FALAISES CH- 1205 GE, 16 octobre 2012 (2012-10-16), pages 1-46, XP015087981,
- BGP COMMUNITY FOR IPV6 SITE MULTIHOMING KI-IL KIM* SANG-HA KIM* DA-HYE CHOI* CHUNGNAM NATIONAL UNIVERSITY* HYOUNG-JUN KIM ** HYUN-: "Internet Draft An Application of the BGP Extended Community Attribute for Distributed IPv6 Site Multihoming; draft-kim-bgp-community-site-multihoming-0 0.txt", 20031001, 1 octobre 2003 (2003-10-01), XP015030901, ISSN: 0000-0004
- MARIA NAPIERALA AT&T LUYUAN FANG DENNIS CAI CISCO SYSTEMS: "IP-VPN Data Center Problem Statement and Requirements; draft-fang-vpn4dc-problem-statement-01.txt ", IP-VPN DATA CENTER PROBLEM STATEMENT AND REQUIREMENTS; DRAFT-FANG-VPN4DC-PROBLEM-STATEMENT-01.TXT , INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 12 juin 2012 (2012-06-12), pages 1-18, XP015083271,

## Description

### Domaine de l'invention

La présente invention se rapporte au domaine des Technologies de l'Information, et notamment au domaine de la virtualisation.

La présente invention se rapporte plus particulièrement à un procédé et à un système permettant l'interaction de machines virtuelles hébergées par des solutions de virtualisation hétérogènes.

Le procédé selon la présente invention permet à des machines virtuelles, hébergées par des solutions de virtualisation hétérogènes et a priori incompatibles entre elles, de communiquer au niveau du réseau, faisant ainsi abstraction des mécanismes de virtualisation sous-jacents.

### État de la technique

Dans l'optique de disposer d'une plate-forme de simulation indépendante des solutions de virtualisation utilisées, il est nécessaire d'avoir un mécanisme permettant à des machines virtuelles, hébergées par différentes solutions de virtualisation, de communiquer entre elles.

En effet, s'il suffit de supporter une seule solution de virtualisation, alors ce besoin est déjà satisfait dans la majorité des cas. Cependant, utiliser une seule solution de virtualisation peut mettre en danger l'avenir de la plate-forme en cas d'arrêt du support de ladite solution.

L'enjeu est donc d'assurer l'avenir d'une telle plate-forme en la rendant indépendante des solutions de virtualisation utilisées.

Les solutions déjà existantes (telles que le projet Hynesim (http://www.hynesim.org)) se contentent de supporter certaines solutions de virtualisation mais pas toutes. Dans le cas où plusieurs sont supportées, il est nécessaire qu'elles soient d'un type bien particulier (hyperviseur de type 2 dit « hébergé »).

La solution technique apportée est alors l'utilisation de « commutateur distribué », tel que le projet VDE (http://vde.sourceforge.net). Cette solution permet alors à des machines virtuelles hébergées par des solutions de virtualisation différentes de type 2 de communiquer entre elles. En revanche, toute machine virtuelle hébergée par une solution de virtualisation de type 1 (dit « natif », comme VMare ESXI par exemple) ne pourra pas communiquer aisément avec les précédentes machines.

Le document Narten T et AL : « Problem Statement : Overlays for Network Virtualisation (XP015088485) décrit un procédé de communication permettant l'interaction d'au moins deux machines virtuelles hébergées par des solutions de virtualisation hétérogènes qui comporte les étapes d'encapsulation de flux réseaux provenant d'interfaces desdites machines virtuelles, leur redirection sur un dispositif physique comportant au moins un processeur et une mémoire, la désencapsulation desdits flux réseaux par ledit dispositif physique et l'établissement par ledit dispositif physique d'une liaison entre lesdits flux réseaux. Tout comme la solution technique précédente, toutes machines virtuelles hébergées par des solutions de virtualisation incompatibles entre elles ne pourront pas communiquer aisément ensemble.

Le document « Requirements for Mobility and Interconnection of Virtual Machine and Virtual Network Elements » rédigé par Bhumip Khasnabish ZTE USA et AL présente les défis et les exigences liés aux migration, la mobilité et l'interconnexion des machines virtuelles (VM) et des réseaux virtuels (VNEs) ainsi que les limitations de différents types de réseau local virtuel (VLAN), les techniques de réseautage privé (VPN) qui sont traditionnellement utilisées pour soutenir ces migrations, mobilités et interconnexions.

Le document WO2008/047930 décrit une technique, par laquelle il est possible de saisir des informations relatives à la session de communication d'un paquet de données encapsulé (paquet interne) en faisant référence au paquet encapsulé lorsque l'encapsulation des paquets est effectuée au travers de la mobilité. Selon cette technique, une application crée trois interfaces de tunnel virtuelles différentes avec des paramètres de configuration différents à trois sessions de communication (flux). De plus, une autre application crée une interface de tunnel virtuel pour flux. Les paquets de chaque flux sont transmis à chacune des interfaces de tunnel virtuel correspondantes de l'application et sont encapsulés. Pour les mêmes raisons que précédemment, toutes machines virtuelles hébergées par des solutions de virtualisation incompatibles entre elles ne pourront pas communiquer aisément ensemble.

### Exposé de l'invention

La présente invention entend remédier aux inconvénients de l'art antérieur en proposant un procédé permettant l'interaction de machines virtuelles hébergées par des solutions de virtualisation hétérogènes.

A cet effet, la présente invention concerne, dans son acceptation la plus générale, un procédé de communication selon la revendication 1.

Les avantages du procédé selon la présente invention sont l'abstraction de la solution de virtualisation qui envoie le flux réseau (peu importe que ce soit une solution de virtualisation de type 1 ou de type 2) ainsi que la capacité à gérer facilement la mise en réseau sur le dispositif physique tiers, car il est aisément configurable.

Selon un mode de réalisation, l'encapsulation des flux réseaux est réalisée à l'aide de la technologie MPLS.

Selon un autre mode réalisation, l'encapsulation des flux réseaux est réalisée à l'aide de la technologie VLAN 5IEEE 802.1Q).

Avantageusement, lesdits flux réseaux sont redirigés vers ledit dispositif physique au moyen d'un commutateur configuré *ad hoc.*

De préférence, chacun desdits flux réseaux est identifié de manière unique au moyen d'un identifiant.

Selon une autre variante, ladite encapsulation desdits flux réseaux est réalisée pour chaque solution de virtualisation.

La présente invention se rapporte également à un système de communication selon la revendication 7.

### Brève description des dessins

On comprendra mieux l'invention à l'aide de la description, faite ci-après à titre purement explicatif, d'un mode de réalisation de l'invention, en référence aux Figures dans lesquelles :
- la Figure 1 illustre les différentes étapes du procédé selon la présente invention ; et
- la Figure 2 représente le système selon la présente invention dans un mode de réalisation.

### Description détaillée des modes de réalisation de l'invention

Le procédé de communication selon la présente invention permet l'interaction d'au moins deux machines virtuelles 10, 11 hébergées par des solutions de virtualisation hétérogènes.

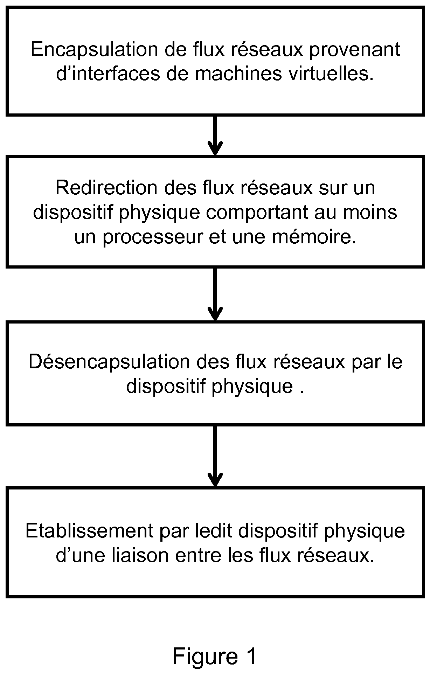

La Figure 1 illustre les différentes étapes du procédé selon la présente invention :
- encapsulation de flux réseaux 30, 31 provenant d'interfaces 20, 21 desdites machines virtuelles 10, 11 ;
- redirection desdits flux réseaux 30,31 sur un dispositif physique 40 comportant au moins un processeur 41 et une mémoire 42 ;
- désencapsulation desdits flux réseaux 30,31 par ledit dispositif physique 40 ; et
- établissement par ledit dispositif physique 40 d'une liaison entre lesdits flux réseaux 30, 31.

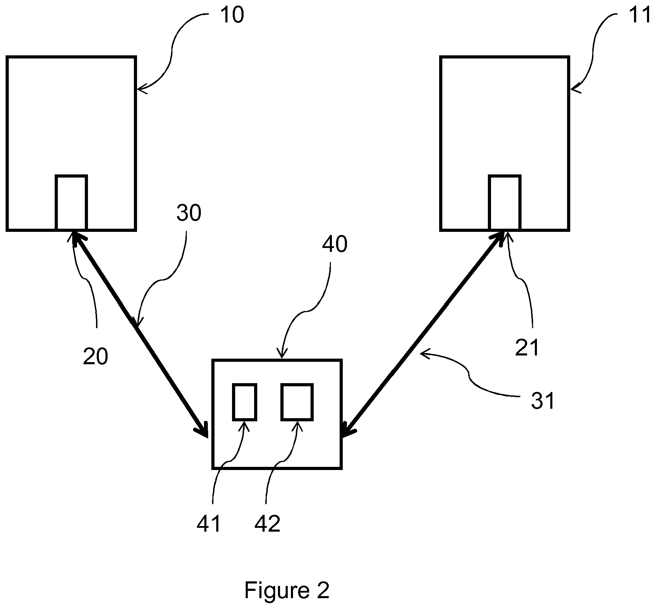

La Figure 2 représente le système selon la présente invention dans un mode de réalisation. Le système de communication 60 selon la présente invention permet l'interaction d'au moins deux machines virtuelles 10, 11 hébergées par des solutions de virtualisation hétérogènes. Ce système de communication 60 comporte des moyens pour :
- encapsuler des flux réseaux 30, 31 provenant d'interfaces 20, 21 desdites machines virtuelles 10, 11 ;
- rediriger lesdits flux réseaux 30,31 sur un dispositif physique 40 comportant au moins un processeur 41 et une mémoire 42 ;
- désencapsuler lesdits flux réseaux 30,31 au moyen dudit dispositif physique 40 ; et
- établir au moyen dudit dispositif physique 40 une liaison entre lesdits flux réseaux 30, 31.

La solution selon la présente invention consiste à encapsuler le flux réseau 30, 31 provenant de chaque interface 20, 21 de chaque machine virtuelle 10,11, quelque soit sa solution de virtualisation, et de le rediriger sur un dispositif (ou machine) physique 40 tiers (tierce) qui se chargera de faire la liaison entre les différents flux réseaux 30, 31.

En effet, chaque solution de virtualisation (ou le système d'exploitation où elle est installée) permet cette encapsulation du flux réseau 30, 31 d'une interface virtuelle. En exploitant cette propriété largement répandue parmi les solutions de virtualisation disponibles, il est ainsi possible de récupérer tous les flux réseaux 30, 31 sur un dispositif physique 40 tiers qui se chargera de la liaison entre les flux réseaux 30, 31.

Habituellement, la mise en réseau des différents flux s'effectue sur une des solutions de virtualisation si elles sont homogènes. L'utilisation de solutions de virtualisation hétérogènes empêche cette mise en réseau de la manière classique. Encapsuler les flux réseaux et laisser la responsabilité de la mise en réseau à un dispositif physique tiers maîtrisé est une solution innovante.

Les avantages du procédé selon la présente invention sont l'abstraction de la solution de virtualisation qui envoie le flux réseau 30, 31 (peu importe que ce soit une solution de virtualisation de type 1 ou de type 2) ainsi que la capacité à gérer facilement la mise en réseau sur le dispositif physique 40 tiers, car il est aisément configurable.

L'encapsulation des flux réseaux 30, 31 sur chaque solution de virtualisation peut se faire à l'aide de plusieurs technologies, comme par exemple les technologies MPLS ou VLAN (norme IEEE 802.1Q).

Dans un mode de réalisation, tous les flux réseaux 30, 31 encapsulés sont redirigés, via un commutateur 50 configuré *ad hoc,* vers le dispositif physique 40 tiers qui procède à la désencapsulation de chaque flux réseau 30, 31 et les met en lien les uns avec les autres, en fonction de la disposition réseau souhaitée.

Dans un mode de réalisation, chaque flux 30, 31 est identifié de manière unique à l'échelle de la plateforme, par un identifiant, par exemple l'identifiant VLAN ID (unique dans toute la plateforme) si la technologie VLAN est utilisée. Selon une variante, l'encapsulation est réalisée de manière centralisée pour éviter les conflits et la rupture du cloisonnement.

La délégation à un dispositif physique 40 tiers de la gestion du réseau virtuel permet de gérer beaucoup plus finement la représentation d'un réseau réel, de ses contraintes et de ses limitations. Grâce au procédé selon la présente invention, certaines caractéristiques du réseau, comme la latence ou la perte éventuelle de paquets, seront représentées de façon plus précise.

Une variante peut consister à relier directement les solutions de virtualisation au dispositif physique 40 tiers sans passer par un commutateur. L'unicité de l'encapsulation des flux n'est alors demandée que pour chaque solution de virtualisation et non plus à l'échelle de la plate-forme tout entière.

Cette variante permet aussi de lever l'inconvénient de la saturation du lien réseau menant au dispositif physique tiers. En revanche, elle oblige à disposer d'une interface réseau physique sur le dispositif physique tiers pour chaque solution de virtualisation utilisée.

La présente invention permet d'acquérir une certaine indépendance vis-à-vis des solutions de virtualisation, dans la mesure où elle permet de mettre en oeuvre différentes solutions de virtualisation hétérogènes.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de communication permettant l'interaction d'au moins deux machines virtuelles (10, 11) hébergées par des solutions de virtualisation hétérogènes, ledit procédé comportant les étapes suivantes :
• encapsulation de flux réseaux (30, 31) provenant d'interfaces (20, 21) desdites machines virtuelles (10, 11) ;
• redirection desdits flux réseaux (30, 31) sur un dispositif physique (40) comportant au moins un processeur (41) et une mémoire (42) ;
• désencapsulation desdits flux réseaux (30, 31) par ledit dispositif (40) ;
• établissement par ledit dispositif physique (40) d'une liaison entre lesdits flux réseaux (30, 31) ;
ledit procédé étant **caractérisé en ce que** :
• lesdites solutions de virtualisation hétérogènes, incompatibles entre elles, sont des solutions de virtualisation de type 1, dit hyperviseur « natif » et de type 2, dit hyperviseur « hébergé » ;
• l'encapsulation desdits flux réseaux (30, 31) est réalisée de manière centralisée quelle que soit sa solution de virtualisation comprenant une virtualisation de type 1, dit hyperviseur « natif » et de type 2, dit hyperviseur « hébergé » sur chaque solution de virtualisation ;
• ledit dispositif physique (40) est un dispositif tiers ;
• l'établissement par ledit dispositif physique tiers (40) d'une liaison entre lesdits flux réseaux (30, 31) est fonction de la disposition réseau souhaitée ;
• une fois la liaison entre lesdits flux réseaux (30, 31) établie, lesdits flux (30, 31) sont mis en réseau.

2. Procédé de communication selon la revendication 1, **caractérisé en ce que** l'encapsulation des flux réseaux (30, 31) est réalisée à l'aide de la technologie MPLS.

3. Procédé de communication selon la revendication 1, **caractérisé en ce que** l'encapsulation des flux réseaux (30, 31) est réalisée à l'aide de la technologie VLAN (IEEE 802.1Q).

4. Procédé de communication selon l'une au moins des revendications 1 à 3, **caractérisé en ce que** lesdits flux réseaux (30, 31) sont redirigés vers ledit dispositif physique tiers (40) au moyen d'un commutateur (50) configuré *ad hoc.*

5. Procédé de communication selon l'une au moins des revendications précédentes, **caractérisé en ce que** chacun desdits flux réseaux (30, 31) est identifié de manière unique au moyen d'un identifiant.

6. Procédé de communication selon l'une au moins des revendications 1 à 5, **caractérisé en ce que** ladite encapsulation desdits flux réseaux (30, 31) est réalisée pour chaque solution de virtualisation.

7. Système de communication (60) permettant l'interaction d'au moins deux machines virtuelles (10, 11) hébergées par des solutions de virtualisation hétérogènes, ledit système comportant des moyens pour :
• encapsuler des flux réseaux (30, 31) provenant d'interfaces (20, 21) desdites machines virtuelles (10, 11) ;
• rediriger lesdits flux réseaux (30,31) sur un dispositif physique (40) comportant au moins un processeur (41) et une mémoire (42) ;
• désencapsuler lesdits flux réseaux (30,31) au moyen dudit dispositif physique (40) ; et
• établir au moyen dudit dispositif physique (40) une liaison entre lesdits flux réseaux (30, 31) ; et
ledit système (60) étant **caractérisé en ce que** :
• lesdites solutions de virtualisation hétérogènes, a priori incompatibles entre elles, sont des solutions de virtualisation de type 1, dit hyperviseur « natif » et de type 2, dit hyperviseur « hébergé » ;
• l'encapsulation desdits flux réseaux (30, 31) est réalisée de manière centralisée, quelle que soit sa solution de virtualisation comprenant une virtualisation de type 1, dit hyperviseur « natif » et de type 2, dit hyperviseur « hébergé » sur chaque solution de virtualisation ;
• ledit dispositif physique (40) est un dispositif tiers ;
• l'établissement par ledit dispositif physique tiers (40) d'une liaison entre lesdits flux réseaux (30, 31) est fonction de la disposition réseau souhaitée ;
• une fois la liaison entre lesdits flux réseaux (30, 31) établie, ledit système (60) est adapté pour procéder à la mise en réseau des flux réseaux (30, 31).

## Patentansprüche

1. Kommunikationsverfahren, welches die Interaktion von wenigstens zwei virtuellen Maschinen (10, 11) ermöglicht, die von heterogenen Virtualisierungslösungen gehostet werden, wobei das Verfahren die folgenden Schritte umfasst:
• Kapselung von Netzwerkflüssen (30, 31), die von Schnittstellen (20, 21) der virtuellen Maschinen (10, 11) stammen;
• Umleitung der Netzwerkflüsse (30, 31) auf eine physische Vorrichtung (40), die wenigstens einen Prozessor (41) und einen Speicher (42) aufweist;
• Entkapselung der Netzwerkflüsse (30, 31) durch die Vorrichtung (40);
• Herstellung einer Verbindung zwischen den Netzwerkflüssen (30, 31) durch die physische Vorrichtung (40);
wobei das Verfahren **dadurch gekennzeichnet ist, dass**:
• die heterogenen Virtualisierungslösungen, die miteinander inkompatibel sind, Virtualisierungslösungen vom Typ 1, "nativer" Hypervisor genannt, und vom Typ 2, "gehosteter" Hypervisor genannt, sind;
• die Kapselung der Netzwerkflüsse (30, 31) bei jeder Virtualisierungslösung auf zentralisierte Weise durchgeführt wird, gleichgültig, von welcher Art ihre Virtualisierungslösung ist, die eine Virtualisierung vom Typ 1, "nativer" Hypervisor genannt, und vom Typ 2, "gehosteter" Hypervisor genannt, umfasst;
• die physische Vorrichtung (40) eine Drittvorrichtung ist;
• die Herstellung, durch die physische Drittvorrichtung (40), einer Verbindung zwischen den Netzwerkflüssen (30, 31) von der gewünschten Netzwerkanordnung abhängig ist;
• nachdem die Verbindung zwischen den Netzwerkflüssen (30, 31) hergestellt ist, die Flüsse (30, 31) vernetzt werden.

2. Kommunikationsverfahren nach Anspruch 1, **dadurch gekennzeichnet, dass** die Kapselung der Netzwerkflüsse (30, 31) mithilfe der MPLS-Technologie durchgeführt wird.

3. Kommunikationsverfahren nach Anspruch 1, **dadurch gekennzeichnet, dass** die Kapselung der Netzwerkflüsse (30, 31) mithilfe der VLAN-Technologie (IEEE 802.1Q) durchgeführt wird.

4. Kommunikationsverfahren nach wenigstens einem der Ansprüche 1 bis 3, **dadurch gekennzeichnet, dass** die Netzwerkflüsse (30, 31) mittels eines ad-hockonfigurierten Kommutators (50) zu der physischen Drittvorrichtung (40) umgeleitet werden.

5. Kommunikationsverfahren nach wenigstens einem der vorhergehende Ansprüche, **dadurch gekennzeichnet, dass** jeder der Netzwerkflüsse (30, 31) mittels einer Kennung eindeutig gekennzeichnet ist.

6. Kommunikationsverfahren nach wenigstens einem der Ansprüche 1 bis 5, **dadurch gekennzeichnet, dass** die Kapselung der Netzwerkflüsse (30, 31) für jede Virtualisierungslösung durchgeführt wird.

7. Kommunikationssystem (60), welches die Interaktion von wenigstens zwei virtuellen Maschinen (10, 11) ermöglicht, die von heterogenen Virtualisierungslösungen gehostet werden, wobei das System Mittel aufweist zum:
• Kapseln von Netzwerkflüssen (30, 31), die von Schnittstellen (20, 21) der virtuellen Maschinen (10, 11) stammen;
• Umleiten der Netzwerkflüsse (30, 31) auf eine physische Vorrichtung (40), die wenigstens einen Prozessor (41) und einen Speicher (42) aufweist;
• Entkapseln der Netzwerkflüsse (30, 31) mittels der physischen Vorrichtung (40);
• Herstellen einer Verbindung zwischen den Netzwerkflüssen (30, 31) mittels der physischen Vorrichtung (40);
wobei das System (60) **dadurch gekennzeichnet ist, dass**:
• die heterogenen Virtualisierungslösungen, die a priori miteinander inkompatibel sind, Virtualisierungslösungen vom Typ 1, "nativer" Hypervisor genannt, und vom Typ 2, "gehosteter" Hypervisor genannt, sind;
• die Kapselung der Netzwerkflüsse (30, 31) bei jeder Virtualisierungslösung auf zentralisierte Weise durchgeführt wird, gleichgültig, von welcher Art ihre Virtualisierungslösung ist, die eine Virtualisierung vom Typ 1, "nativer" Hypervisor genannt, und vom Typ 2, "gehosteter" Hypervisor genannt, umfasst;
• die physische Vorrichtung (40) eine Drittvorrichtung ist;
• die Herstellung, durch die physische Drittvorrichtung (40), einer Verbindung zwischen den Netzwerkflüssen (30, 31) von der gewünschten Netzwerkanordnung abhängig ist;
• nachdem die Verbindung zwischen den Netzwerkflüssen (30, 31) hergestellt ist, das System (60) dafür ausgelegt ist, die Vernetzung der Netzwerkflüsse (30, 31) durchzuführen.

## Claims

1. Communication method allowing the interaction of at least two virtual machines (10, 11) hosted by heterogeneous virtualization solutions, said method comprising the following steps:
• encapsulation of network streams (30, 31) originating from interfaces (20, 21) of said virtual machines (10, 11);
• redirection of said network streams (30, 31) onto a physical device (40) comprising at least one processor (41) and a memory (42);
• de-encapsulation of said network streams (30, 31) by said physical device (40);
• establishment by said physical device (40) of a link between said network streams (30, 31);
said method being **characterized in that**:
• said heterogeneous virtualization solutions, which are incompatible with one another, are virtualization solutions of type 1, termed "native" hypervisor, and of type 2, termed "hosted" hypervisor;
• the encapsulation of said network streams (30, 31) is carried out in a centralized manner whatever its virtualization solution comprising a virtualization of type 1, termed "native" hypervisor, and of type 2, termed "hosted" hypervisor, on each virtualization solution;
• said physical device (40) is a third-party device;
• the establishment by said third-party physical device (40) of a link between said network streams (30, 31) is a function of the desired network arrangement;
• once the link between said network streams (30, 31) is established, said streams (30, 31) are networked.

2. Communication method according to Claim 1, **characterized in that** the encapsulation of the network streams (30, 31) is carried out with the aid of MPLS technology.

3. Communication method according to Claim 1, **characterized in that** the encapsulation of the network streams (30, 31) is carried out with the aid of VLAN technology (IEEE 802.1Q).

4. Communication method according to at least one of Claims 1 to 3, **characterized in that** said network streams (30, 31) are redirected toward said third-party physical device (40) by means of an ad hoc configured switch (50).

5. Communication method according to at least one of the preceding claims, **characterized in that** each of said network streams (30, 31) is identified in a unique manner by means of an identifier.

6. Communication method according to at least one of Claims 1 to 5, **characterized in that** said encapsulation of said network streams (30, 31) is carried out for each virtualization solution.

7. Communication system (60) allowing the interaction of at least two virtual machines (10, 11) hosted by heterogeneous virtualization solutions, said system comprising means for:
• encapsulating network streams (30, 31) originating from interfaces (20, 21) of said virtual machines (10, 11);
• redirecting said network streams (30, 31) onto a physical device (40) comprising at least one processor (41) and a memory (42);
• de-encapsulating said network streams (30, 31) by means of said physical device (40); and
• establishing by means of said physical device (40) a link between said network streams (30, 31); and
said system (60) being **characterized in that**:
• said heterogeneous virtualization solutions, which are incompatible with one another a priori, are virtualization solutions of type 1, termed "native" hypervisor, and of type 2, termed "hosted" hypervisor;
• the encapsulation of said network streams (30, 31) is carried out in a centralized manner whatever its virtualization solution comprising a virtualization of type 1, termed "native" hypervisor, and of type 2, termed "hosted" hypervisor, on each virtualization solution;
• said physical device (40) is a third-party device;
• the establishment by said third-party physical device (40) of a link between said network streams (30, 31) is a function of the desired network arrangement;
• once the link between said network streams (30, 31) is established, said system (60) is adapted for networking the network streams (30, 31).
